# EUROPÄISCHE PATENTANMELDUNG

(11) **EP 1 641 009 A1**
(43) Veröffentlichungstag der Anmeldung: **29.03.2006**
(21) Anmeldenummer: 04104638.4
(22) Anmeldetag: 23.09.2004
(51) Int. Cl.: H01H 13/70

(54) **Funktionsfolie und Verfahren zu seiner Herstellung**

(71) Anmelder: IEE INTERNATIONAL ELECTRONICS & ENGINEERING S.A., 6468 Echternach (LU)
(72) Erfinder: Schliffski, Stephanie, 7243 Bereldange (LU)
(74) Vertreter: Beissel, Jean

(57) **Zusammenfassung**

Bei einem Verfahren zum Herstellen von Funktionsfolien, wird eine obere Dekorschicht (1) mit mindestens einer auf deren Rückseite aufgebrachten Funktionsschicht (2,3) auf einer Rückseite mit einem thermoplastischen Formmaterial (6) hinterspritzt. Dabei wird einem Funktionsbereich der Funktionsschicht vor der Hinterspritzen der Dekorschicht und der mindestens einen drauf aufgebrachten Funktionsschicht mit dem thermoplastischen Formmaterial ein Schutzkern (4) zugeordnet. Erfindungsgemäß wird beim Hinterspritzen zumindest ein Teilbereich des Schutzkerns mit hinterspritzt, so dass der Schutzkern als Schutzkappe mit der Dekorschicht und der drauf aufgebrachten Funktionsschicht dauerhaft verbunden.

## Beschreibung

Die vorliegende Erfindung betrifft generell ein Verfahren zum Herstellen von Funktionsfolien sowie nach diesem Herstellungsverfahren hergestellte Funktionsfolien.
Funktionsfolien wie beispielsweise Leuchtfolien oder Schaltfolien umfassen in der Regel eine vordere Dekor- und Schutzfolie auf deren Rückseite mindestens eine Funktionsschicht aufgebracht ist. Die Funktionsschicht kann beispielsweise eine Leuchtschicht aus einem geeigneten Leuchtmaterial und/oder eine elektrische Kontaktierungsschicht mit einer Schaltfunktion und/oder eine druckempfindliche Schicht umfassen. Auf der Rückseite der Funktionsschicht und der Dekorschicht ist die Funktionsfolie mit einem geeigneten thermoplastischen Material hinterspritzt, das der Handhabung und der Formgebung des Funktionsfolie dient.
Bei der Herstellung derartiger Funktionsfolien ist darauf zu achten, dass insbesondere die Funktionsschicht während des Hinterspritzvorgangs mit dem thermoplastischen Material nicht durch die hier auftretenden hohen Temperaturen zerstört wird. Eine solche Zerstörung oder Beschädigung der Funktionsschicht muss insbesondere in dem Funktionsbereich, d.h. in dem Bereich in dem die Funktionsschicht später aktiv sein soll, wirksam verhindert werden. Aus diesem Grund wird beispielsweise während des Hinterspritzvorgangs ein Kern aus Metall in dem Funktionsbereich an die Funktionsschicht angelegt, so dass diese vor dem direkten Kontakt mit dem thermoplastischen Material geschützt ist. Dieser Metallkern ist ein Teil des Spritzwerkzeugs und wird demnach nach dem Spritzvorgang beim Öffnen des Spitzwerkzeugs erneut entfernt.
Durch das Setzen eines Metallkerns von hinten können sich allerdings unerwünschte Abdrücke des Kerns auf der Funktionsfolie abzeichnen. Zudem können in den an dem Metallkern angrenzenden Bereichen der Funktionsfolie Lufteinschlüsse entstehen.

### Aufgabe der Erfindung

Aufgabe der vorliegenden Erfindung ist es folglich, ein anderes Verfahren zur Herstellung einer solchen Funktionsfolie vorzuschlagen.

### Allgemeine Beschreibung der Erfindung

Diese Aufgabe wird erfindungsgemäß gelöst durch ein Verfahren nach Anspruch 1. Bei einem solchen Verfahren zum Herstellen von Funktionsfolien, wird eine obere Dekorschicht mit mindestens einer auf deren Rückseite aufgebrachten Funktionsschicht auf einer Rückseite mit einem thermoplastischen Formmaterial hinterspritzt. Dabei wird einem Funktionsbereich der Funktionsschicht vor der Hinterspritzen der Dekorschicht und der mindestens einen drauf aufgebrachten Funktionsschicht mit dem thermoplastischen Formmaterial ein Schutzkern zugeordnet. Erfindungsgemäß wird beim Hinterspritzen zumindest ein Teilbereich des Schutzkerns mit hinterspritzt, so dass der Schutzkern als Schutzkappe mit der Dekorschicht und der drauf aufgebrachten Funktionsschicht dauerhaft verbunden.

Bei dem vorliegenden Verfahren wird der Schutzkern, der während dem Hinterspritzen mit dem thermoplastischen Formmaterial die Formschicht vor Beschädigung oder Zerstörung soll, teilweise mit umspritzt, so dass der Schutzkern dauerhaft mit den darüber liegenden Schichten verbunden wird. Die Dekorfolie mit der darauf aufgebrachten Funktionsschicht passt sich dabei der Kontur der Schutzkappe an, und nimmt diese dauerhaft an. Hierdurch können ungewollte Ausstülpungen in der Dekorschicht bei geeigneter Formgebung der Schutzkappe wirksam vermieden werden.

In einer vorteilhaften Ausgestaltung des Verfahrens ist der Schutzkern aus einem thermisch isolierenden Material, d.h. einem Material mit geringer thermischer Leitfähigkeit, hergestellt. Durch ein solches isolierendes Material wird eine gute thermische Schutzwirkung erreicht so dass hohe Temperatur der Funktionsschicht wirksam verhindert werden. In einer besonders vorteilhaften Ausgestaltung ist der Schutzkern aus dem thermoplastischen Formmaterial hergestellt. Bei einer derartigen Ausgestaltung verschmilzt der Schutzkern in den umspritzten Teilbereichen mit dem hinterspritzten Formmaterial so dass eine sehr haltbare Verbindung zwischen den einzelnen Teilen entsteht. Hierdurch kann eine besonders hohe Steifigkeit des hergestellten Formteils erreicht werden. Außerdem werden Lufteinschlüsse in der Umgebung der Schutzkappe wirksam verhindert.

Der Schutzkern kann in einer der Funktionsschicht zugewandten Fläche vorteilhaft eine Aussparung derart aufweisen, dass in einem Funktionsbereich ein bestimmter Mindestabstand zwischen der Schutzkappe und der Funktionsschicht gewährleistet ist. In diesem Fall wirkt die Schutzkappe als Abstandhalter, die eine Druckbeaufschlagung der Funktionsschicht durch das Hinterspritzungsmaterial verhindert. Dies ist insbesondere dann von besonderer Wichtigkeit, wenn die Funktionsschicht eine drucksensitive Schicht umfasst, bei der eine durch die Hinterspritzung bedingte Vorlast zu einer Beeinträchtigung der späteren Funktion führt.

Die vorliegende Erfindung betrifft ebenfalls eine Funktionsfolie, die nach einem Verfahren nach Anspruch 1 hergestellt wurde. Eine derartige Funktionsfolie umfasst eine obere Dekorschicht und mindestens eine auf der Rückseite der Dekorschicht aufgebrachten Funktionsschichty die auf einer Rückseite mit einem thermoplastischen Formmaterial hinterspritzt sind. Entsprechend der vorliegenden Erfindung ist eine Schutzkappe einem Funktionsbereich der Funktionsschicht zugeordnet und zumindest in einem Teilbereich mit dem thermoplastischen Formmaterial derart hinterspritzt, dass die Schutzkappe mit der Dekorschicht und der drauf aufgebrachten Funktionsschicht dauerhaft verbunden ist.

In bevorzugten Ausgestaltungen dieser Funktionsfolie ist die Schutzkappe aus einem thermisch isolierenden Material, beispielsweise dem thermoplastischen Hinterspritzungsmaterial hergestellt. Vorzugsweise weist die Schutzkappe in einer der Funktionsschicht zugewandten Fläche eine Aussparung derart auf, dass in einem Funktionsbereich ein bestimmter Mindestabstand zwischen der Schutzkappe und der Funktionsschicht gewährleistet ist. Die Schutzkappe wirkt dann als Abstandhalter, die eine Druckbeaufschlagung der Funktionsschicht durch das Hinterspritzungsmaterial verhindert.

Die Funktionsschicht kann beispielsweise eine Leuchtschicht oder eine drucksensitive Schicht oder eine Kombination hieraus umfassen.

Da die Schutzkappe nach der Hinterspritzung ein integraler Bestandteil der Funktionsfolie ist, kann diese zur Integration weiterer zum Betrieb der Funktionsfolie notwendigen Elemente dienen. So kann die Schutzkappe beispielsweise in einer der Funktionsschicht zugewandten Fläche eine oder mehrere Kontaktanordnungen aufweisen, die beim Anordnen des Schutzkerns an der Funktionsschicht mit entsprechenden Kontaktanordnungen der Funktionsschicht kontaktiert werden. Hierdurch kann die Funktionsschicht in einfacher Weise beim Zusammenfügen der verschiedenen Elemente kontaktiert werden. Die Kontaktanordnungen können dabei in an sich bekannter Weise beispielsweise als Federkontakte, Steckkontakte, Crimpkontakte o.ä. ausgebildet sein.

In einer möglichen Ausgestaltung können Anschlussleitungen für die Funktionsschicht in die Schutzkappe integriert und rückseitig aus der Schutzkappe herausgeführt sein. Die Schutzkappe mit den integrierten, an den Kontaktanordnungen angeschlossenen Anschlussleitungen kann, gegebenenfalls zusammen mit einem geeigneten äußeren Steckerelement, als vorgefertigtes Bauelement zur Verfügung gestellt werden, so dass der Herstellungsprozess wesentlich vereinfacht wird.

In einer weiteren möglichen Ausgestaltung kann eine Treiberelektronik für die Funktionsschicht in die Schutzkappe integriert sein. Dabei kann es sich beispielsweise um eine Verstärkerelektronik handeln oder um eine Inverterschaltung im Fall einer elektrolumineszierenden Funktionsschicht. In diesem Fall weist die Schutzkappe vorteilhaft zumindest eine vorzugsweise verschließbare Zugangsöffnung in den Bauraum für die Treiberelektronik auf, so dass diese für Wartungszwecke zugänglich ist.

In einer weiteren möglichen Ausgestaltung können in der der Funktionsschicht zugewandten Fläche der Schutzkappe Leuchtelemente, z.B. Leuchtdioden, angeordnet sein, die beispielsweise eine Funktionsschicht mit Schaltfunktion hinterleuchten, so dass Schaltsymbole auf der Dekorschicht sichtbar werden.

Es ist anzumerken, dass das vorliegende Verfahren vorteilhaft bei der Herstellung von Schaltelementen für Fahrzeug-Bedienfelder eingesetzt werden kann. Diese Schaltelemente dienen z.B. als Fensteröffner, Bedienelemente für Sitzheizung, Schrifterkennungs-Touchpad, etc. Die auf die Dekorfolie aufgedruckte Symbolik sollte hierbei mit einer Leuchtfolie hinterleuchtet werden.
Die Herstellung solcher Bedienfelder umfasst das Hinterspritzen von Dekorfolie auf unterschiedlichen Polymerbasen zusammen mit elektrolumineszierenden Folien bzw. Schichten (EL-Schicht) auf deren Rückseite Drucksensoren (FSR-Schicht) angebracht sind. In diesem Fall können die EL-Schicht und die FSR-Schicht während des Hinterspritzprozesses durch einen aus dem hinterspritzten Material bestehenden Kern geschützt werden, der mit umspritzt wird und durch den gleichzeitig die Anschlüsse geführt werden, bzw. der den Inverter für die EL Folie enthält.

Das vorliegende Verfahren weist hierbei die folgenden Vorteile auf:
□ Vermeidung von Zerstörung der EL Folie und der FSR Sensoren durch das Hinterlegen eines Kerns aus dem zu hinterspritzenden Material.
□ Vermeidung von Abdrücken des Kerns auf der Oberfläche und von Lufteinschlüssen in der Umgebung des Kerns.
□ Saubere Lösung hinsichtlich des Anschlusses von EL Folie und FSR Sensoren im Rahmen eines Spritzgussprozesses.
□ Saubere Integration eines Inverters in ein spritzvergossenes Teil mit gleichzeitiger Möglichkeit der Wartung des Inverters.

Es ist anzumerken, dass das vorliegende Verfahren auch bei der Herstellung reiner Dekorfolien verwendet werden kann, wobei in diesem Fall ein von hinten aufgedrucktes Motiv der Dekorfolie während des Spritzverfahrens geschützt ist.

### Detaillierte Beschreibung anhand der Figuren

Im folgenden wird eine Ausgestaltung der Erfindung anhand der beiliegenden Figuren beschrieben. Es zeigen:
- Fig.1:: einen Schichtaufbau einer ersten Ausgestaltung eines beleuchteten Schaltelements vor dem Hinterspritzen
- Fig.2:: einen Schichtaufbau einer zweiten Ausgestaltung eines beleuchteten Schaltelements vor dem Hinterspritzen
- Fig.3:: eine Funktionsfolie mit dem Schichtaufbau nach Fig. 1 nach der Hinterspritzung.

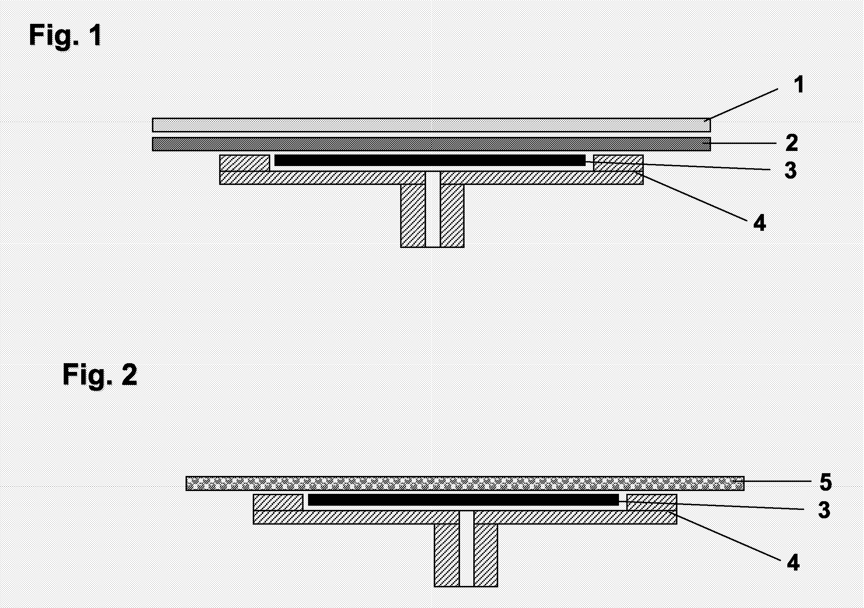

In Abbildung 1 ist der Aufbau eines zu hinterspritzenden Schichtaufbaus für die Herstellung einer Funktionsfolie abgebildet. Dieser Schichtaufbau umfasst:
□ eine Dekorfolie 1 auf geeigneten Polymerbasen auf deren Rückseite die zu beleuchtenden Symbole gedruckt sind;
□ eine Leuchtfolie 2, z.B. eine EL Folie, zum Hinterleuchten der Symbole;
□ eine FSR Sensorfolie 3 als Schaltelement zur Aktivierung der dem jeweiligen Symbol zugeordneten Schaltfunktion; und
□ eine Schutzkappe aus dem zu hinterspritzenden Material mit Anschlusskanal für die EL Folie als auch die FSR Bedienfelder und integriertem Inverter für die EL Folie.

In Fig. 2 ist ein anderer Schichtaufbau abgebildet, mit einer Dekorfolie 5 auf deren Rückseite ein Zierdruck angebracht ist, der die Symbole darstellt und auf den direkt der EL Druck angebracht ist.

Vor dem Hinterspritzen werden die Schichten 1, 2 und 3 aufeinander laminiert. Dieser Schichtaufbau 1, 2, 3 oder der Schichtaufbau 5 wird dann in das Spritzgusswerkzeug eingelegt. In eine dafür vorgesehene Vorrichtung wird auf die andere Seite des Werkzeugs der Schutzkern 4 eingelegt.

Das Werkzeug wird anschließend zusammengefahren und hinterspritzt die Dekorfolie 1, den Bereich der EL Folie 2, auf den keine EL gedruckt ist und Teile des Schutzkerns 4.

Dabei werden Kontaktanordnungen, beispielsweise Federkontakte oder ähnliche, die an der vorderen Stirnfläche des Schutzkerns 4 angeordnet sind, auf die Ausgänge der FSR Sensoren und der EL Leuchteinheit gedrückt so dass diese kontaktiert werden. Anschlussleitungen, die an den Kontaktanordnungen angeschlossen sind verlaufen vorzugsweise durch den Kern und kommen hinten aus dem Kern heraus, um einen sauberen Anschluss der EL Folie und der FSR Sensoren zu gewährleisten.

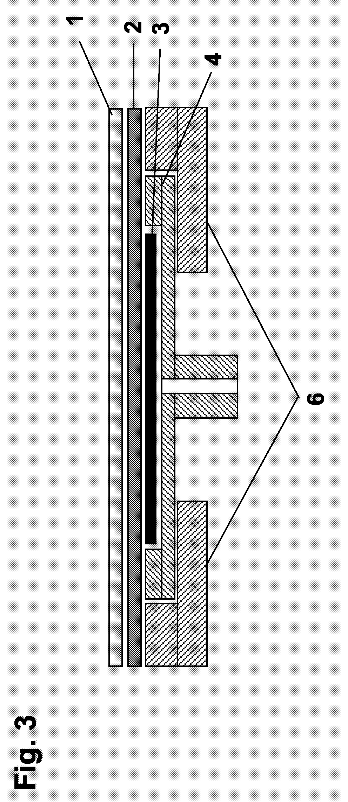

In Abbildung 3 ist das fertige Schaltelement zu sehen, wobei das Spritzgussmaterial mit dem Referenzzeichen 6 versehen ist.

## Patentansprüche

1. Verfahren zum Herstellen von Funktionsfolien, wobei eine obere Dekorschicht mit mindestens einer auf deren Rückseite aufgebrachten Funktionsschicht auf einer Rückseite mit einem thermoplastischen Formmaterial hinterspritzt wird, wobei einem Funktionsbereich der Funktionsschicht vor der Hinterspritzen der Dekorschicht und der mindestens einen drauf aufgebrachten Funktionsschicht mit dem thermoplastischen Formmaterial ein Schutzkern zugeordnet wird, **dadurch gekennzeichnet dass** beim Hinterspritzen zumindest ein Teilbereich des Schutzkerns mit hinterspritzt wird, so dass der Schutzkern als dauerhafte Schutzkappe mit der Dekorschicht und der drauf aufgebrachten Funktionsschicht dauerhaft verbunden wird.

2. Verfahren nach Anspruch 1, wobei der Schutzkern aus einem thermisch isolierenden Material hergestellt ist.

3. Verfahren nach einem der Ansprüche 1 oder 2, wobei der Schutzkern aus dem thermoplastischen Formmaterial hergestellt ist.

4. Verfahren nach einem der Ansprüche 1 bis 3, wobei der Schutzkern in einer der Funktionsschicht zugewandten Fläche eine Aussparung derart aufweist, dass in einem Funktionsbereich ein bestimmter Mindestabstand zwischen der Schutzkappe und der Funktionsschicht gewährleistet ist.

5. Verfahren nach einem der Ansprüche 1 bis 4, wobei der Schutzkern in einer der Funktionsschicht zugewandten Fläche eine oder mehrere Kontaktanordnungen aufweist, die beim Anordnen des Schutzkerns an der Funktionsschicht mit entsprechenden Kontaktanordnungen der Funktionsschicht kontaktiert werden.

6. Verfahren nach einem der vorhergehenden Ansprüche, wobei die Funktionsschicht eine Leuchtschicht oder eine drucksensitive Schicht oder eine Kombination hieraus umfasst.

7. Funktionsfolie umfassend eine obere Dekorschicht und mindestens eine auf der Rückseite der Dekorschicht aufgebrachten Funktionsschicht, die auf einer Rückseite mit einem thermoplastischen Formmaterial hinterspritzt sind, **gekennzeichnet durch** eine Schutzkappe, die einem Funktionsbereich der Funktionsschicht zugeordnet ist und die zumindest in einem Teilbereich mit dem thermoplastischen Formmaterial derart hinterspritzt ist, dass die Schutzkappe mit der Dekorschicht und der drauf aufgebrachten Funktionsschicht dauerhaft verbunden ist.

8. Funktionsfolie nach Anspruch 7, wobei die Schutzkappe aus einem thermisch isolierenden Material hergestellt ist

9. Funktionsfolie nach einem der Ansprüche 7 oder 8, wobei die Schutzkappe aus dem thermoplastischen Hinterspritzungsmaterial hergestellt ist.

10. Funktionsfolie nach einem der Ansprüche 7 bis 9, wobei die Schutzkappe in einer der Funktionsschicht zugewandten Fläche eine Aussparung derart aufweist, dass in einem Funktionsbereich ein bestimmter Mindestabstand zwischen der Schutzkappe und der Funktionsschicht gewährleistet ist.

11. Funktionsfolie nach einem der Ansprüche 7 bis 10, wobei die Schutzkappe in einer der Funktionsschicht zugewandten Fläche eine oder mehrere Kontaktanordnungen aufweist, die beim Anordnen des Schutzkerns an der Funktionsschicht mit entsprechenden Kontaktanordnungen der Funktionsschicht kontaktiert werden.

12. Funktionsfolie nach einem der Ansprüche 7 bis 11, wobei Anschlussleitungen für die Funktionsschicht in die Schutzkappe integriert und rückseitig aus der Schutzkappe herausgeführt sind.

13. Funktionsfolie nach einem der Ansprüche 7 bis 12, wobei eine Treiberelektronik für die Funktionsschicht in die Schutzkappe integriert ist.

14. Funktionsfolie nach Anspruch 13, wobei die Schutzkappe zumindest eine Zugangsöffnung in den Bauraum für die Treiberelektronik aufweist.

15. Funktionsfolie nach einem der vorhergehenden Ansprüche, wobei die Funktionsschicht eine Leuchtschicht oder eine drucksensitive Schicht oder eine Kombination hieraus umfasst.
